# EUROPÄISCHE PATENTSCHRIFT

(11) **EP 0 355 278 B1**
(45) Veröffentlichungstag und Bekanntmachung des Hinweises auf die Patenterteilung: **09.03.1994**
(21) Anmeldenummer: 89109548.1
(22) Anmeldetag: 26.05.1989
(51) Int. Cl.: H02G 1/06, E02F 5/10, E02F 5/14

(54) **Verfahren zum Einpflügen insbesondere von Kabeln und Verlegepflug zur Durchführung des Verfahrens**
Process for ploughing, in particular cables and laying plough for carrying out the process
Procédé de pose à charrue, en particulier des câbles et charrue de pose pour la mise en oeuvre du procédé

(30) Priorität: 23.08.1988 DE 3828595
(43) Veröffentlichungstag der Anmeldung: 28.02.1990
(73) Patentinhaber: Meischen, Gerold, D-27801 Dötlingen (DE); Meischen, Helmut, D-27801 Dötlingen (DE)
(72) Erfinder: Meischen, Gerold, D-27801 Dötlingen (DE); Meischen, Helmut, D-27801 Dötlingen (DE)
(74) Vertreter: Möller, Friedrich, Dipl.-Ing.

(56) Entgegenhaltungen:
- DE-A- 3 504 977
- DE-U- 8 328 861
- FR-A- 2 102 575
- FR-A- 2 305 872

## Beschreibung

Die Erfindung betrifft ein Verfahren zum Einpflügen von Kabeln oder dergleichen in den Boden gemäß dem Oberbegriff des Anspruchs 1. Des weiteren betrifft die Erfindung einen Verlegepflug gemäß dem Oberbegriff des Anspruchs 6.

Bei der Verlegung von Erdkabeln hat sich das Einpflügen von Kabeln in den Boden als leistungsfähige und zuverlässige Methode bewährt. Hierzu dient ein hinter ein Zugfahrzeug (Traktor, Raupe etc.) gehängter Verlegepflug, mit dessen Pflugschar das Erdreich aufgerissen wird und hinter der Pflugschar in das aufgerissene Erdreich die durch einen Kabelschacht geführten Kabel gelegt werden.

Die Erfindung befaßt sich mit dem gleichzeitigen Einpflügen mehrerer Kabel. Diese werden vorzugsweise teils nebeneinander und teils übereinander im sogenannten Dreiecksverbund verlegt. Dazu ist es aus der DE-A-3 504 977 bekannt, die Kabel schon im Dreiecksverbund im Kabelschacht des Verlegepfluges zu führen. Dazu muß der Kabelschacht des bekannten Verlegepfluges eine relativ große lichte Breite von mindestens zwei nebeneinanderliegenden Kabeln aufweisen.

Aus der FR-A-2 305 872 ist ebenfalls ein zum gleichzeitigen Einpflügen mehrerer Kabel dienender Verlegepflug bekannt. Dieser weist in Verlegerichtung hintereinander bzw. übereinander angeordnete Kabelführungskanäle zur Aufnahme einzelner Kabel auf. Die Kabelführungskanäle sind mit gegenüber den Kabeln wesentlich größerer Breite, nämlich einer Breite von etwa zwei Kabeln, ausgebildet.

In der Praxis erfordern die aus der DE-A-3 504 977 und der FR-A-2 305 872 bekannten Verlegepflüge ein entsprechend breites Aufpflügen des Erdreichs. Dazu müssen relativ hohe Zugkräfte durch das Zugfahrzeug aufgebracht werden, was zu einer großen Belastung des Verlegepflugs führt.

Hiervon ausgehend liegt der Erfindung die Aufgabe zugrunde, ein Verfahren zum Einpflügen von Kabeln oder dergleichen und einen entsprechenden Verlegepflug zu schaffen, womit das Einpflügen wenigstens teilweise nebeneinanderliegender Kabel mit geringem Aufwand zuverlässig möglich ist.

Das Verfahren zur Lösung dieser Aufgabe weist die Merkmale des Anspruchs 1 auf. Durch die Führung der Kabel in einer in Verlegerichtung vertikal verlaufenden Ebene im Kabelschacht und einer erst kurz vor Austritt aus dem Kabelschacht erfolgenden Umorientierung der Kabel ist es möglich, den Kabelschacht im wesentlichen mit einer geringen lichten Breite von etwa dem Durchmesser nur eines Kabels auszubilden. Dementsprechend schmal kann die Pflugschar ausgebildet werden. Das hat den Vorteil, daß in Verlegeposition nebeneinanderliegende Kabel mit einem Zugkraftaufwand und einem Erdauswurf verlegbar sind, der in etwa dem eines einzelnen einzupflügenden Kabels entspricht.

Vorteilhafterweise werden die Kabel ausgehend von einer Anordnung in einer vertikalen Ebene durch eine Zwangsführung kurz vor dem Austritt aus dem Kabelschacht umorientiert zu teilweise nebeneinanderliegenden Kabeln. Dadurch erhalten die Kabel in zuverlässiger Weise im Bereich der Pflugsohle ihre endgültige Relativposition zueinander in unterschiedlich vertikalen und horizontalen Ebenen.

Der zur Lösung der erfindungsgemäßen Aufgabe dienende Verlegepflug weist die Merkmale des Anspruchs 6 auf. Demnach verfügt der Kabelschacht über mehrere in einer in Verlegerichtung vertikalen Ebene über- bzw. hintereinanderliegende Kabelführungskanäle. Die lichte Breite der Kabelführungskanäle entspricht etwa dem Durchmesser eines Kabels, so daß der Kabelschacht und damit auch der Pflugschar im Bereich der Kabelführungskanäle eine Breite aufweisen, die auch bei einem Verlegepflug für nur ein einziges Kabel erforderlich wäre. Um gleichwohl die Kabel sowohl neben- als auch übereinander verlegen zu können, ist hinter den Kabelführungskanälen ein Orientierungsabschnitt angeordnet. In diesem, also im Bereich zwischen den Austrittsöffnungen der Kabelführungskanäle und der erdseitigen Öffnung des Kabelschachtes, erfolgt die Umorientierung der Kabel.

Aufgrund der erfindungsgemäß besonderen Anordnung von Kabelführungskanälen im Kabelschacht erfolgt in demselben zweckmäßigerweise eine bogenförmige Führung der Kabel, wobei die Eintrittsöffnungen der Kabelführungskanäle derart angeordnet sind, daß die Kabel etwa senkrecht hintereinanderliegend in den Kabelschacht eingeführt werden können. Demgegenüber liegen die Austrittsöffnungen der Kabelführungskanäle etwa übereinander, wodurch die Kabel waagerecht übereinanderliegend die Austrittsöffnungen der Kabelführungskanäle kurz vor der erdseitigen Öffnung des Kabelschachtes im Bereich der Pflugsohle verlassen. Auf diese Weise lassen sich mehrere Kabel exakt dem erfindungsgemäß ausgebildeten Kabelschacht zuführen. Sie können nach Verlassen der Kabelführungskanäle noch im Kabelschacht in die vorgegebene Verlegeposition mit teilweise nebeneinanderliegenden Kabeln umorientiert werden.

Im Bereich des Orientierungsabschnitts ist der Kabelschacht mit einer zur erdseitigen Öffnung desselben hin kontinuierlich zunehmenden (waagerechten) Aufweitung versehen. Dadurch ist nur im unbedingt notwendigen Umfang der Kabelschacht an die Breite mehrerer nebeneinanderliegender Kabel angepaßt, wodurch nur in einem eng begrenzten Bereich der Pflugfurche, nämlich nahe der Pflugsohle, eine im Vergleich zum Einpflügen nur eines Kabels größere Furchenbreite erforderlich ist. Der Umfang des Erdauswurfs wird dadurch so gut wie gar nicht größer. Der Zugkraftaufwand vergrößert sich nur unwesentlich gegenüber dem Einpflügen nur eines Kabels.

Durch die Aufweitung des Kabelschachts nur im Bereich des Orientierungsabschnitts braucht die Pflugschar nur die Breite von etwa einem Kabel aufzuweisen, da die Aufweitung im Bereich der Pflugsohle vom Kabelschacht aus erfolgt. Alternativ ist es jedoch auch möglich, im Bereich der Pflugsohle die Pflugschar entsprechend zu verbreitern. Der Kabelschacht wird dadurch entlastet, weil er in seinem Orientierungsabschnitt keine Pflugarbeit zur Aufweitung der Pflugsohle zu verrichten hat.

Nach einem weiteren Vorschlag der Erfindung ist dem Orientierungsabschnitt des Kabelschachts wenigstens ein Führungsorgan zum Überführen der in einer Ebene übereinanderliegenden Kabel in unterschiedliche Ebenen zugeordnet. Das Kabelführungsorgan kann als ein an der erdseitigen Öffnung des Kabelschachts angeordnetes, matrizenförmiges Paßstück ausgebildet sein. Dieses verfügt über einen profilierten Durchgang, der an die Umrisse der Formation der zu verlegenden Kabel angepaßt ist. Hierdurch ist eine besonders zuverlässige Umorientierung der Kabel in die für die Verlegung vorgesehene Gruppierung gewährleistet. Für den Fall, daß die Orientierung der zu verlegenden Kabel geändert werden muß, können andere Endstücke der erdseitigen Öffnung des Kabelschachts zugeordnet werden. Zweckmäßigerweise ist dazu das Endstück leicht lösbar mit dem Kabelschacht verbunden.

Alternativ oder zusätzlich zum Paßstück kann das Führungsorgan eine oder mehrere Keilführungen aufweisen. Bei Verwendung einer Keilführung wird diese einer Seitenwand des Kabelschachts im Bereich des Orientierungsabschnitts zugeordnet, und zwar derart, daß die Keilführung in horizontaler Richtung den Orientierungsabschnitt zur erdseitigen Öffnung des Kabelschachts hin kontinuierlich verringert. Die Höhe des Führungskeils ist bei Verlegen von drei Kabeln im Dreiecksverbund so gewählt, daß das aus der untersten Austrittsöffnung aus dem Kabelführungsschacht austretende Kabel sich nicht im Einflußbereich des Führungskeils befindet, während die beiden darüberliegenden Kabel sich anfänglich gemeinsam im Bereich des Führungskeils befinden, wobei der Führungskeil jedoch zur erdseitigen Öffnung des Kabelschachts hin sich so weit verjüngt, daß nur noch das obere Kabel vom Führungskeil beeinflußt wird. Auf diese Weise werden durch den Führungskeil zunächst die beiden unteren Kabel nebeneinanderliegend in eine horizontale Ebene überführt und das dritte Kabel in eine mittige Sattellage über den beiden unteren Kabeln gebracht.

Bei einer bevorzugten Weiterbildung des erfindungsgemäßen Verlegepfluges sind oberhalb der Kabelführungskanäle vorzugsweise zwei übereinanderliegende Bandführungskanäle angeordnet. Die Bandführungskanäle dienen zur Zufuhr von zwei flachen Bändern zur Bildung einer Schutzabdeckung für die verlegten Kabel. Die Bänder werden flachliegend in einem Bogen durch die Bandführungskanäle hindurchgeführt. Die Breite der Bänder und der Bandführungskanäle entspricht etwa dem Durchmesser eines Kabels. Um eine Abdeckung nebeneinanderliegender Kabel zu gewährleisten, werden - wie die Kabel - nach dem Austritt der Bänder aus den etwa oberhalb der Austrittsöffnungen der Kabelkanäle endenden Bändführungskanälen auch die Bänder auseinanderbewegt, und zwar vorzugweise so weit, daß sie an ihren einander zugerichteten Rändern sich noch leicht überlappen zur Bildung einer vollständigen Schutzabdeckung mit einer Breite von etwa dem doppelten Kabeldurchmesser. Für dieses Auseinanderbewegen der ursprünglich übereinandergeführten Bänder verfügt der Orientierungsabschnitt über entsprechende Leitorgane, vorzugsweise Führungskanäle, mit sich allmählich auseinanderbewegenden Austrittsöffnungen. Demzufolge werden die Bänder analog zu den Kabeln erst kurz vor der erdseitigen Öffnung im Kabelschacht auseinanderbewegt.

Schließlich wird vorgeschlagen, die Kabelführungskanäle und/oder die Bandführungskanäle derart auszubilden, daß in diese Kabel bzw. Bänder von der Seite her einlegbar sind. Hierdurch wird es ermöglicht, bei Arbeitsbeginn bzw. bei Arbeitsende oder zum Ansetzen neuer Kabel oder Bänderrollen mit geringem Aufwand die Kabel oder Bänder in den Kabelschacht zu bringen. Dies wird zum einen dadurch erreicht, daß die Kabelführungskanäle bzw. Bandführungskanäle mit einer Seite fest an einer Seitenwand des Kabelschachts befestigt sind, während zu der gegenüberliegenden Seitenwand des Kabelschachts keine Verbindung mit den Kabelführungs- bzw. Bandführungskanälen besteht. Es lassen sich dann durch ein Aufschwenken der nicht mit den Kabel- bzw. Bandführungskanälen verbundenen Seitenwand, die im geschlossenen Zustand eine Seite der Kabel- bzw. Bandführungsschächte bildet, seitlich die Kabelführungsschächte bzw. die Bandführungsschächte freilegen zum einfachen Einlegen bzw. Ausfädeln sowohl der Kabel als auch von Bändern. Alternativ wird vorgeschlagen, die Kabelführungskanäle und ggf. die Bandführungskanäle zu einem Kanalpaket zusammenzufassen.

Dieses ist lösbar im Kabelkanal befestigt. In diesem Falle erfolgt ein Einlegen und Herausnehmen von Kabeln bzw. Bändern aus den Kabel- bzw. Bandführungskanälen dadurch, daß nach dem Lösen des Kanalpakets dieses aus dem Kabelschacht herausgehoben wird, wonach die zumindest auf einer Seite vollständig freien Kabel- bzw. Bandführungsschächte frei zugänglich werden. Gegenüber der erstgenannten Alternative braucht beim letztgenannten Fall der Kabelschacht mit der Pflugschar nicht aus dem Erdreich herausgehoben zu werden, um an die Kabel- bzw. Bandführungsschächte heranzukommen.

Das erfindungsgemäße Verfahren wird beispielshaft an einem bevorzugten Ausführungsbeispiel des Verlegepflugs nachfolgend anhand der Zeichnungen näher erläutert. In dieser zeigen:
- Fig. 1: eine schematische Darstellung eines von einer Raupe gezogenen Verlegepfluges,
- Fig. 2: einen Kabelschacht des Verlegepfluges in perspektivischer Darstellung bei einer aufgeklappten Seitenwand,
- Fig. 3: eine Ansicht einer erdseitigen Öffnung des Kabelschachts in Verlegerichtung,
- Fig. 4: eine Umorientierung dreier übereinanderliegender Kabel in einen Dreiecksverbund in schematisch, perspektivischer Darstellung,
- Fig. 5: eine Draufsicht auf den Kabelschacht der Fig. 2 bei geschlossener Seitenwand, und
- Fig. 6: einen Querschnitt durch das Erdreich mit drei darin verlegten Kabeln und zwei darüber angeordneten Bändern.

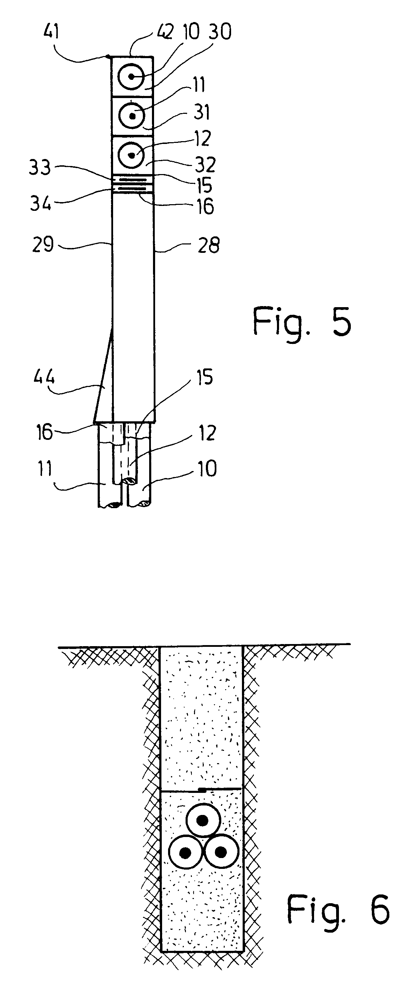

Nachfolgend wird das erfindungsgemäße Verfahren und der Verlegepflug zur Durchführung desselben beschrieben im Zusammenhang mit der Verlegung dreier Kabel im sogenannten Dreiecksverbund, nämlich zwei nebeneinanderliegenden Kabeln 10 und 11 und einem mittig in Sattellage darüberliegenden Kabel 12. Oberhalb der Kabel 10...12 befindet sich eine Abdeckung 13 aus im vorliegenden Falle zwei mit geringfügiger Überlappung 14 nebeneinanderliegenden (schmalen) Bändern 15, 16 (Fig. 6).

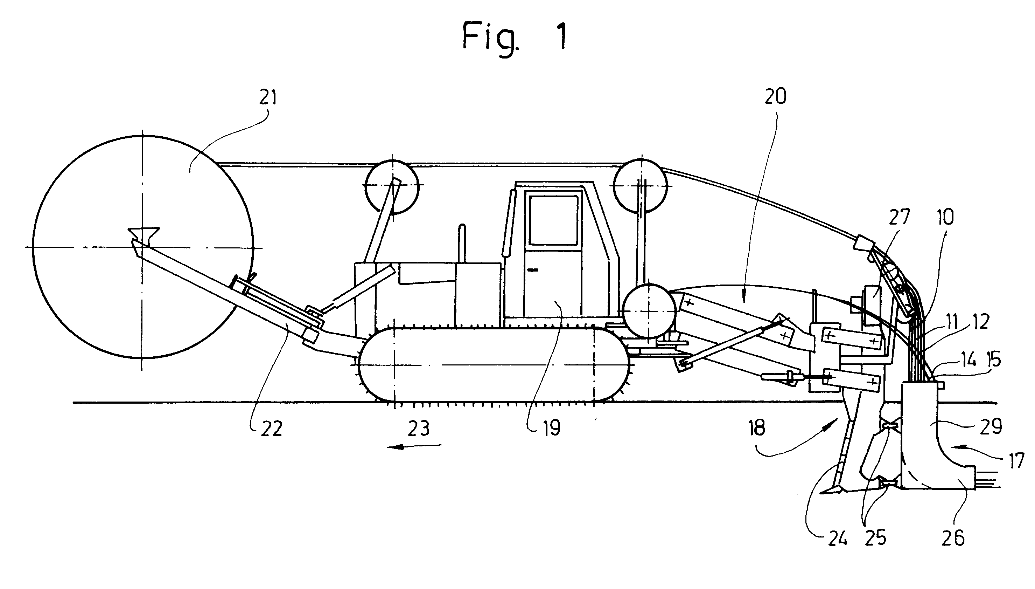

Die Kabel 10..12 und die Bänder 15, 16 werden in das Erdreich 17 eingepflügt durch einen Verlegepflug 18. Der Verlegepflug 18 ist im vorliegenden Ausführungsbeispiel hinter einer Raupe 19 befestigt mittels einer üblichen, gelenkigen Verbindung, beispielsweise einer Dreipunktaufhängung 20 (Fig. 1). Die Raupe 19 dient somit als Zugfahrzeug für den Verlegepflug 18. Im vorliegenden Ausführungsbeispiel dient die Raupe 19 weiterhin zur Aufnahme von Vorratsrollen 21 für die drei Kabel 10..12, d.h. die Raupe 19 trägt im vorliegenden Ausführungsbeispiel drei nebeneinanderliegende Vorratsrollen 21. Diese sind auf einer gemeinsamen Achse nebeneinanderliegend an einem vor der Raupe 19 sich befindenden Frontlader 22 heb- und senkbar angeordnet.

Der in der Fig. 1 schematisch dargestellte Verlegepflug 18 verfügt über eine in Verlegerichtung (Pfeil 23) vornliegende Pflugschar 24 und einen daran mittels zweier übereinanderliegender Anlenkpunkte 25 befestigten Kabelschacht 26. Im vorliegenden Ausführungsbeispiel ist die Pflugschar 24 durch einen Schwingungserzeuger 27 in Schwingungen versetzbar zum leichteren Aufreißen des Erdreichs 17. Der Kabelschacht 26 hingegen ist nahezu schwingungsfrei an die Pflugschar angehängt, wozu die beiden Anlenkpunkte 25 als Schwingungsdämpfer ausgebildet sind (Fig. 1).

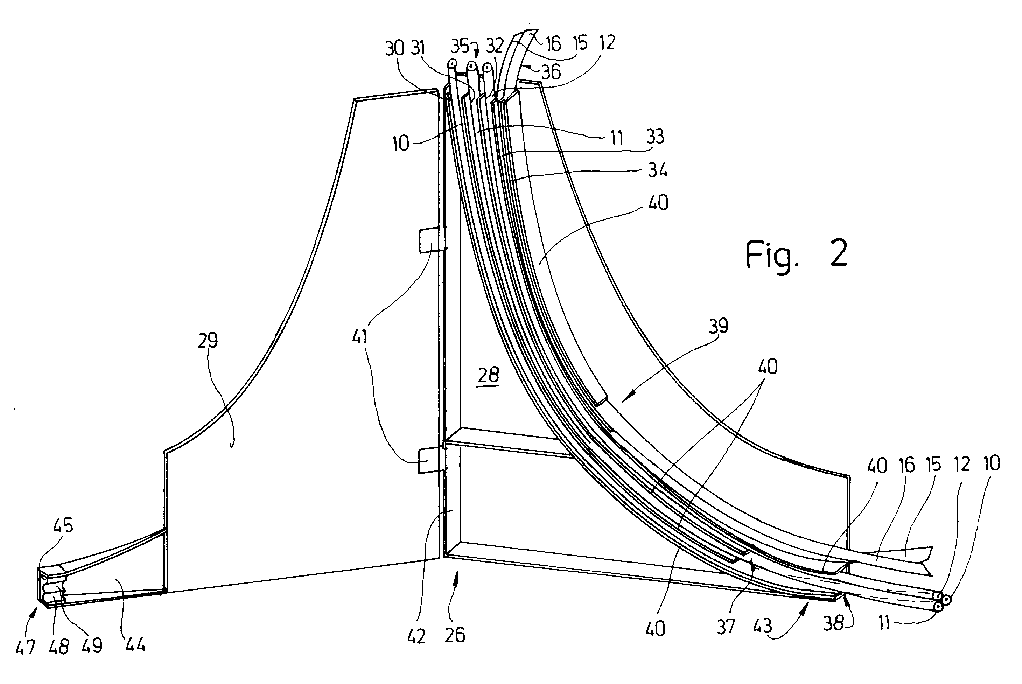

Der Kabelschacht 26 ist in erfindungsgemäß besonderer Weise für die Verlegung der drei Kabel 10..12 ausgebildet (Fig. 2). Demzufolge verfügt der Kabelschacht 26 über zwei parallele, aufrechte Seitenwände 28, 29, zwischen denen die Kabel 10..12 und die Bänder 15, 16 im Bogen während der Verlegung hindurchgeleitet werden. Geführt werden dabei die Kabel 10..12 und die Bänder 15, 16 in drei Kabelführungskanälen 30, 31 und 32 sowie zwei Bandführungskanälen 33 und 34.

Die Kabelführungskanäle 30..32 und die Bandführungskanäle 33, 34 verfügen über in einer gemeisamen horizontalen Ebene hintereinanderliegende Eintrittsöffnungen 35, 36. Somit erfolgt ein Eintritt der Kabel 10..12 und der Bänder 15, 16 in den Kabelschacht 26 mit in etwa senkrechtem Richtungsverlauf. Die Kabelführungskanäle 30, 32 und 33 münden mit übereinanderliegenden Austrittsöffnungen 37 und (horizontalem) Abstand vor einer einzigen, aufrechten erdseitigen Öffnung 38 des Kabelschachts 26. Die Bandführungskanäle 33 und 34 sind im vorliegenden Ausführungsbeispiel erheblich kürzer als die Kabelführungskanäle 30, 31 und 32, so daß die Austrittsöffnungen 39 für die Bandführungskanäle 33, 34 mit einem beträchtlichen Abstand vor den Austrittsöffnungen 37 liegen.

Die Kabelführungskanäle 30..32 bzw. die Bandführungskanäle 33, 34 werden gebildet einerseits aus streifenförmigen Kanalwänden 40 und den gegenüberliegenden Seitenwänden 28, 29 des Kabelschachts 26 andererseits. Die streifenförmig ausgebildeten Kanalwände 40 sind quergerichtet zwischen den parallelen Seitenwänden 28, 29 angeordnet, und zwar mit einem bogenförmigen Verlauf. Die Kanalwände 40 zur Bildung der Kabelführungskanäle 30..32 verlaufen etwa parallel zueinander, und zwar mit einem Abstand, der etwa dem Abstand der Seitenwände 28, 29 entspricht. Dieser Abstand wiederum ist etwas größer als der Durchmesser des größten zu verlegenden Kabels 10, 11 bzw. 12.

Im gezeigten Ausführungsbeispiel sind die Kanalwände 40 fest mit einer Seitenwand 28 des Kabelschachts 26 verbunden, vorzugsweise verschweißt. Die gegenüberliegende Seitenwand 29 ist schwenkbar ausgebildet, nämlich mit zwei Scharnieren 41 an einer aufrechten quer zur Verlegerichtung 23 verlaufenden Vorderwand 42 des Kabelschachts 26 angelenkt. Im zugeklappten Zustand verdeckt die Seitenwand 29 sowohl die Kabelführungskanäle 30..32 als auch die Bandführungskanäle 33, 34, während im aufgekappten Zustand der Seitenwand 29 die Kabelführungskanäle 30..32 und die Bandführungskanäle 33, 34 seitlich freigelegt werden zum Einlegen bzw. Herausnehmen der Kabel 10..12 bzw. der Bänder 15, 16 aus dem Kabelschacht 26.

In erfindungsgemäß besonderer Weise ist ein zwischen den Austrittsöffnungen 37 der Kabelführungskanäle 30..32 und der erdseitigen Öffnung 38 des Kabelschachts 26 sich befindender Orientierungsabschnitt 43 ausgebildet. Im Bereich des Orientierungsabschnitts 43 nimmt nämlich die Breite des Kabelschachts 26 kontinuierlich zur erdseitigen Öffnung 38 hin zu. Dadurch können im Orientierungsabschnitt 43 die innerhalb einer vertikalen Ebene übereinander- bzw. hintereinanderliegend in den Kabelführungskanälen 31..33 geführten Kabeln 10..12 umorientiert werden in den vorgesehenen Dreiecksverbund mit nebeneinanderliegenden unteren Kabeln 10 und 11. Die erdseitige Öffnung 38 weist somit im Vergleich zum übrigen Kabelschacht 26 eine etwa doppelt breite Öffnung zum Hindurchtritt nebeneinanderliegender Kabel 10, 11 auf. Eine Führung der Kabel 10..12 im Orientierungsabschnitt 43 erfolgt zwischen einem aufgeweiteten Abschnitt 44 an der Unterseite des Kabelschachts und bis zur erdseitigen Öffnung 38 durchgezogenen oberen und unteren Kanalwänden 40. Im vorliegenden Ausführungsbeispiel ist der aufgeweitete Abschnitt 44 nur der aufklappbaren Seitenwand 29 des Kabelschachts 26 zugeordnet, so daß der Kabelschacht 26 nur an einer Seite sich verbreitert. Alternativ können aber auch beiden Seitenwänden 28 und 29 aufgeweitete Abschnitte zugeordnet sein, die dann nur etwa die halbe Breite des einzigen aufgeweiteten Abschnitts 44 aufzuweisen brauchen.

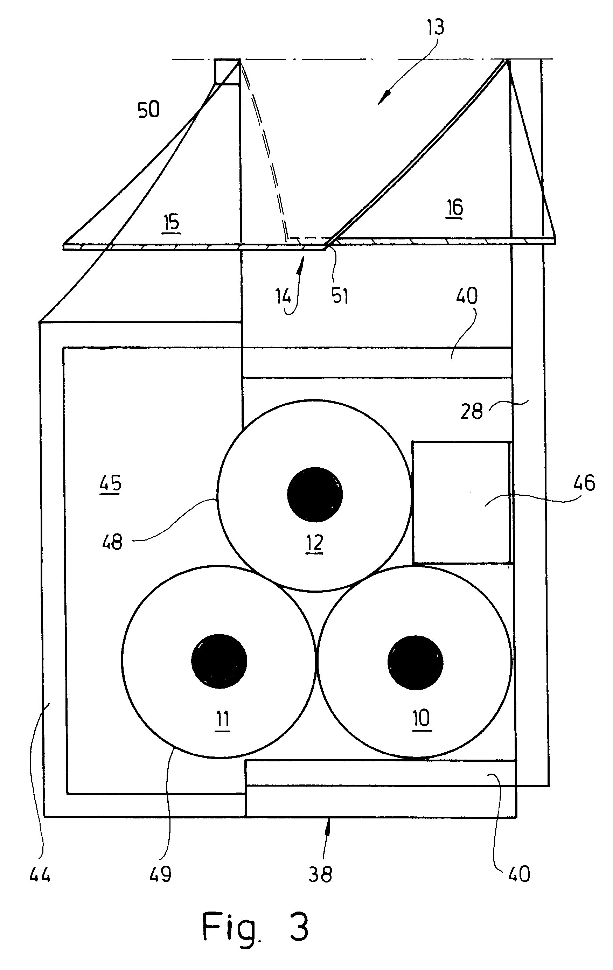

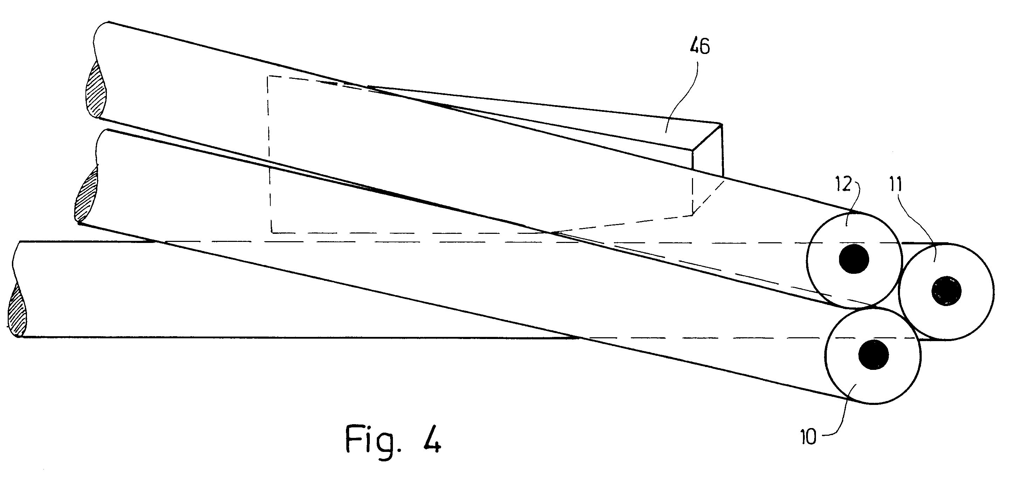

Die Umorientierung der Kabel 10, 11, 12 von einer in mehrere Ebenen wird unterstützt durch formschlüssige Führungsorgane. Im gezeigten Ausführungsbeispiel verfügt der Orientierungsabschnitt 43 über zwei Führungsorgane, nämlich ein Paßstück 45 und eine Keilführung 46. Das Paßstück 45 ist der erdseitigen Öffnung 38 zugeordnet und erstreckt sich etwa über den halben Querschnitt derselben. Eine zur Führung der Kabel 11 und 12 dienende freie Seitenfläche des Paßstücks 45 ist mit einer Profilierung 47 aus zwei übereinanderliegenden Teilkreisabschnitten 48, 49 versehen (Fig. 3). Dadurch bringt das Paßstück 45 eines der untenliegenden Kabel, nämlich das Kabel 11, und das in Sattellage mittig darüberliegende Kabel 12 in die vorgesehene Position zur Bildung des Dreieckverbundes. An der dem Paßstück 45 gegenüberliegenden Seite der erdseitigen Öffnung 38 des Orientierungsabschnitts 43 befindet sich die Keilführung 46. Diese ist verbunden mit der feststehenden Seitenwand 28 des Kabelschachts 26 und nimmt zur erdseitigen Öffnung 38 hin in der Dicke kontinuierlich zu (Fig. 4). Die Höhe der Keilführung 46 ist derart bemessen, daß anfänglich, also zur Austrittsöffnung 37 hin, die beiden obenliegenden Kabel 10, 12 sich im Einflußbereich der Keilführung 46 befinden, während durch eine zur erdseitigen Öffnung 38 hin stetig abnehmende Höhe der Keilführung 46 mit zunehmender Dicke derselben sich nur noch das oberste Kabel 12 im Einflußbereich der Keilführung 46 befindet (Fig. 4). Die maximale Dicke der Keilführung 46 kurz vor der erdseitigen Öffnung 38 des Kabelschachts 26 beträgt etwa die Hälfte der Dicke des Kabels 10, wodurch das obere Kabel 12 mittig (in Sattellage) auf die darunter befindlichen, nebeneinanderliegenden Kabel 10, 11 bewegt wird.

Die beiden Bänder 15, 16 werden aus ihrer mit Abstand übereinanderliegenden Position im Bereich des Orientierungsabschnitts 43 ebenfalls so umorientiert, daß sie mit überlappenden Rändern 50, 51 eine etwa in einer Ebene sich befindende Abdeckung 13 mit etwa der Breite zweier Kabel 10, 11 mit Abstand oberhalb des Dreierverbunds der Kabel 10..12 ins Erdreich 17 eingelegt werden (Fig. 6). Zum Auseinanderbewegen der Bänder 15, 16 dienen in den Figuren nicht gezeigte Führungsschuhe, in die die Bänder 15, 16 übereinanderliegend eintreten und mit Überlappung 14 nebeneinanderliegend austreten und auch so die erdseitige Öffnung 38 des Kabelschachts 26 verlassen.

Nach dem vorstehend beschriebenen Verfahren kann mit einem entsprechend modifizierten Verlegepflug eine größere Anzahl von Kabeln (oder auch nur zwei Kabel) in analoger Weise verlegt werden. Bei mehr als drei Kabeln liegen mehrere Kabel paarweise nebeneinander, so daß diese einen vom beschriebenen Dreieckverbund abweichenden Verbund erhalten.

## Patentansprüche

1. Verfahren zum Einpflügen von Kabeln (10, 11, 12) in den Boden, wobei die einzupflügenden Kabel (10, 11, 12) oder dergleichen durch einen Kabelschacht (26) eines Verlegepfluges geleitet werden, **dadurch gekennzeichnet,** daß die Kabel (10, 11, 12) zunächst in einer im wesentlichen gemeinsamen, in Verlegerichtung (23) etwa vertikal verlaufenden Ebene im Kabelschacht (26) geführt werden und erst kurz vor dem Austritt aus dem Kabelschacht (26) wenigstens einige Kabel (11, 12) aus dieser im wesentlichen gemeinsamen Ebene herausgeleitet werden.

2. Verfahren nach Anspruch 1, dadurch gekennzeichnet, daß die Kabel (10..12) während eines annähernd geraden horizontalen Verlaufs im Kabelschacht (26) aus der gemeinsamen (vertikalen) Ebene in unterschiedliche (nebeneinanderliegende) Ebenen gebracht werden, und zwar vorzugsweise zwangsgeführt.

3. Verfahren nach Anspruch 1 oder 2, dadurch gekennzeichnet, daß drei Kabel (10, 11 , 12), vorzugsweise gleicher Durchmesser, in einem Dreiecksverbund mit sich in einer Sattellage befindenden oberen dritten Kabel (12) und darunter nebeneinanderliegenden Kabeln (10, 11) gebracht werden.

4. Verfahren nach einem der Ansprüche 1-3, dadurch gekennzeichnet, daß die Kabel (10, 11, 12) von zwei etwa flach nebeneinanderliegenden Bändern (15, 16) abgedeckt werden, die vorzugsweise - ähnlich wie die Kabel (10..12) - mit Abstand übereinanderliegend im Kabelschacht (26) geführt und erst kurz vor dem Austritt aus demselben auseinanderbewegt werden.

5. Verfahren nach Anspruch 4, dadurch gekennzeichnet, daß die Bänder (15, 16) vor dem Austritt aus dem Kabelschacht (26) nur so weit auseinanderbewegt werden, daß ihre zueinandergerichteten Ränder (50, 51) in einem schmalen Bereich sich überlappen.

6. Verlegepflug zum Einpflügen von Kabeln (10, 11, 12) oder dergleichen in den Boden mit wenigstens einer Pflugschar und einem in Verlegerichtung (23) hinter der Pflugschar angeordneten Kabelschacht (26), der mindestens in einer vertikalen Ebene über bzw. hintereinanderliegende Kabelführungskanäle (30, 31, 32) zur Aufnahme jeweils eines Kabels (10, 11, 12) aufweist, dadurch gekennzeichnet, daß die Kabelführungskanäle (30, 31, 32) eine lichte Breite von etwa einem Kabel (10, 11 bzw. 12) aufweisen und Austrittsöffnungen (37) der Kabelführungskanäle (30, 31, 32) mit Abstand vor einer erdseitigen Öffnung (38) des Kabelschachtes (26) enden zur Bildung eines den Austrittsöffnungen (37) der Kabelführungskanäle (30, 31, 32) nachfolgenden Orientierungsabschnitts (43) zur Umorientierung der Kabel (10, 11, 12).

7. Verlegepflug nach Anspruch 6, dadurch gekennzeichnet, daß die vorzugsweise parallel zueinander bogenförmig verlaufenden Kabelführungskanäle (30..32) in Verlegerichtung (23) hintereinanderliegende Eintrittsöffnungen (35) zum etwa senkrechten Eintritt der Kabel (10..12) und übereinanderliegende Austrittsöffnungen (37) zum etwa waagerechten Austritt der Kabel (10..12) aufweisen.

8. Verlegepflug nach einem der Ansprüche 6 und 7, dadurch gekennzeichnet, daß die Breite des Kabelschachts (26) und der Pflugschar (24) etwa dem Durchmesser des größten einzupflügenden Kabels (10, 11 bzw. 12) entspricht.

9. Verlegepflug nach einem der Ansprüche 6 bis 8, dadurch gekennzeichnet, daß der Kabelschacht (26) sich im Bereich des Orientierungsabschnitts (43) zur erdseitigen Öffnung (38) hin kontinuierlich erweiternd ausgebildet ist, insbesondere die erdseitige Öffnung (38) sich bis etwa über die Breite zweier nebeneinanderliegender Kabel (10, 11) erweitert, vorzugsweise in horizontaler Richtung.

10. Verlegepflug nach Anspruch 9, dadurch gekennzeichnet, daß der Kabelschacht (26) im Bereich des Orientierungsabschnitts (43) mit wenigstens einem Führungsorgan zum Überführen der in einer Ebene übereinander- bzw. hintereinanderliegend aus den Kabelführungskanälen (30..32) austretenden Kabel (10..12) in nebeneinanderliegenden Ebenen versehen ist.

11. Verlegepflug nach Anspruch 10, dadurch gekennzeichnet, daß das Führungsorgan als ein matrizenartiges Paßstück (45) in der erdseitigen Öffnung (38) des Kabelschachts (26) ausgebildet ist, daß vorzugsweise eine durchgehende Profilierung (47) aus mehreren Teilkreisabschnitten (48, 49) mit Umrissen entsprechend der Formation der zu verlegenden Kabel (10..12) aufweist.

12. Verlegepflug nach Anspruch 10, dadurch gekennzeichnet, daß das Führungsorgan als ein im Orientierungsabschnitt (43) an einer Seitenwand (28) des Kabelschachts (26) fest angebrachte Keilführung (46) ausgebildet ist, die den Orientierungsabschnitt (43) bereichsweise zur erdseitigen Öffnung (38) des Kabelschachts (26) hin verjüngt, und mit seinen zu der Austrittsöffnung (37) der Kabelführungskanäle (30..32) gerichteten Ende sich im Bereich der beiden oberen Kabel (11, 12) erstreckt sowie zur erdseitigen Öffnung (38) des Kabelschachts (26) hin in der Höhe abnimmt zur Überdeckung nur noch des oberen Kabels (12), wobei die größte Dicke der Keilführung (46) vorzugsweise etwa dem halben Durchmesser des Kabels (10, 11 bzw. 12) entspricht.

13. Verlegepflug nach einem der Ansprüche 6-12, dadurch gekennzeichnet, daß oberhalb der Kabelführungskanäle (30..32) zwei übereinanderliegende Bandführungskanäle (33, 34) für zwei Bänder (15, 16) zur Abdeckung der Kabel (10..12) angeordnet sind und die Bandführungskanäle (33, 34) vorzugsweise zum parallelen Führen der Bänder (15, 16) im flachliegenden Zustand ausgebildet sind.

14. Verlegepflug nach einem der Ansprüche 6-13, dadurch gekennzeichnet, daß die Kabelführungskanäle (30..32) und die beiden Bandführungskanäle (33, 34) zum seitlichen Einlegen der Kabel (10..12) bzw. Bänder (15, 16) ausgebildet sind, in den vorzugsweise die Kabelführungskanäle (30..32) und/oder die Bandführungskanäle (33, 34) mit einer Seite an einer Seitenwand (28) des Kabelschachts (26) befestigt sind und an der gegenüberliegenden, offenen Seite durch eine aufklappbare und schließbare Seitenwand (29) des Kabelschachts (26) verschließbar sind.

15. Verlegepflug nach einem der Ansprüche 6-14, dadurch gekennzeichnet, daß die Kabelführungskanäle (30..32) und die Bandführungskanäle (33, 34) als zusammenhängendes Kabelpaket lösbar zwischen festen, parallelen Seitenwänden (28, 29) des Kabelschachts (26) angeordnet sind, und der Kabelschacht (26) oben vollständig offen ist zum Herausziehen bzw. Hineinlassen des gesamten Kanalpakets.

16. Verlegepflug nach Anspruch 15, dadurch gekennzeichnet, daß die Kabelführungskanäle (30..32) und die Bandführungskanäle (33, 34) im Kanalpaket jeweils an einer Seite vollständig offen sind zum Einlegen der Kabel (10..12) bzw. Bänder (15, 16) von der Seite der Kabelführungskanäle (30..32) bzw. Bandführungskanäle (33, 34) her.

## Claims

1. Process for ploughing under cables (10, 11, 12) into the earth, the cables to be ploughed under being guided by a cable pit (26) of a plough, characterized in that the cables (10, 11, 12) are at first guided in a cable pit in an essentially common plane extending vertically in the laying direction and at least some cables (11, 12) being led out of the essentially common plane only shortly before exiting the cable pit (26).

2. Process according to claim 1, characterized in that the cables (10..12) are brought into different (adjacent) planes from the common (vertical) plane during an almost horizontal run in the cable pit (26), preferably by restricted guidance.

3. Process according to claim 1 or 2, characterized in that three cables (10, 11, 12), of preferably equal diameter, are brought in to a triangular orientation with an upper third cable lying in a saddle position and adjoining cables (10, 11) lying thereunder.

4. Process according to one of the claims 1 to 3, characterized in that the cables (10, 11, 12) are covered by two bands (15, 16) lying approximately flatly next to one another, the bands (15, 16) being guided preferably in the cable pit (26) and - similar to the cables (10..12) - lying at a distance on top of one another and only being moved away from one another shortly before exiting the cable pit (26).

5. Process according to claim 4, characterized in that the bands (15, 16), before exiting from the cable pit, are moved apart only so far that the edges (50, 51) directed towards one another overlap one another in a narrow area.

6. Plough for ploughing under cables (10, 11, 12) or the like into the earth with at least one plough blade and a cable pit (26) arranged behind the plough blade in the laying direction, the cable pit (26) having cable guiding channels (30, 31, 32), located one above another or one behind another in at least one vertical plane, for the accomodation of at least one cable (10, 11, 12) each, characterized in that the cable guiding channels (30, 31, 32) have a clear width of approximately one cable (10, 11 or 12) and outlet openings (37) of the cable guiding channels (30, 31, 32) ending at a distance of an opening (38) of the cable pit (26) directed towards the earth, for the formation of an orientation section downstream of the outlet opening (37) of the cable guiding channels (30, 31, 32) for the reorientation of the cables.

7. Plough according to claim 6, characterized in that the cable guiding channels (30..32) which preferably extend arcuately and parallel to one another in the laying direction (23) have inlet openings (35) located behind one another relative to the approximately perpendicular inlet of the cables (10..12) and outlet openings (37) located on top of one another relative to the approximately vertical outlet of the cables (10..12).

8. Plough according to one of claims 6 and 7, characterized in that the width of the cable pit (26) and the plough blade (24) approximately corresponds to the diameter of the largest cable (10, 11 or 12) to be plowed under.

9. Plough according to one of claims 6 to 8, characterized in that the cable pit (26) is designed in a manner continuously widening in the direction of the opening (38) directed towards the earth, until especially the opening (38) has a width of approximately two adjacent cables (10, 11), preferably in horizontal direction.

10. Plough according to claim 9, characterized in that the cable pit (26), in the region of the orientation section (43), is provided with at least one guiding member for transferring the cables lying on top of one another or behind one another in a plane and exiting the cable guiding channels (30..32), into planes adjacent to one another.

11. Plough according to claim 10, characterized in that the guiding member takes the form of a matrix-like fitting piece (45) in the opening (3) of the cable pit (26) directed towards the earth, which preferably has a continuous profile (47) made of a plurality of portions of a circle having outlines corresponding to the formation of the cabels to be laid.

12. Plough according to claim 10, characterized in that the guiding member is designed as a wedge guideway (46) which is fixedly arranged on a sidewall (28) of the cable pit (26) in the orientation section (43), the orientation section (43), as a result, tapering in sections in the direction of the opening (38) of the cable pit (26) directed towards the earth, and the wedge guideway (46) extending in the region of the two upper cables (11, 12) with its end directed towards the outlet opening (37) of the cable guiding members (30..32) and decreasing in height in the direction of the opening (38) of the cable pit (26) directed towards the earth in order to overlap only the upper cable (12), the greatest thickness of the wedge guideway (46) preferably corresponding to half of the diameter of the cable (10, 11 or 12).

13. Plough according to one of claims 6 to 12, characterized in that two band guiding channels (33, 34) located on top of one another are arranged above the cable guiding channels (30..32) for two bands (15, 16) for covering the cables (10, 12) and the band guiding channels (33, 34) are preferably designed so as to guide the bands (15, 16) in flat-lying position.

14. Plough according to one of claims 6 to 13, characterized in that the cable guiding channels (30..32) and the two band guiding channels (33, 34) are designed for the lateral insertion of the cables (10..12) or bands (15, 16) in such a maner that preferably the cable guiding channels (30..32) and/or the band guiding channels (33, 34) are fixed with one side to a side wall (28) of the cable pit (26) and are closeable on the opposite, open side by a hinging and lockable side wall (29) of the cable pit (26).

15. Plough according to one of claims 6 to 14, characterized in that the cable guiding channels (30..32) and the band guiding channels (30, 34) are detachably arranged as a channel package between fixed, parallel side walls (28, 29) of the cable pit (26) and the cable pit (26) is completely open at the top for pulling out or letting in the entire channel package.

16. Plough according to claim 15, characterized in that the cable guiding channels (30..32) and the band guiding channels (33, 34) are each completely open on one side for the insertion of cables (10..12) or bands (15, 16) from the side of the cable guiding channels (30..32) or band guiding channels (33, 34).

## Revendications

1. Procédé de pose de câbles (10, 11, 12) dans le sol dans lequel les câbles (10, 11, 12) ou éléments analogues à poser dans le sol à l'aide d'une charrue sont guidés par un puits à câbles (26) d'une charrue de pose, caractérisé en ce que les câbles (10, 11, 12) sont guidés tout d'abord dans le puits à câbles (26) dans un plan sensiblement commun à peu près vertical dans la direction de pose (23) et en ce que, peu avant la sortie du puits à câbles (26), au moins certains câbles (11, 12) sont retirés de ce plan sensiblement commun.

2. Procédé selon la revendication 1, caractérisé en ce que les câbles (10...12) sont amenés pendant leur déplacement approximativement horizontal et en ligne droite dans le puits à câbles (26) du plan (vertical) commun dans différents plans (disposés les uns à côté des autres) et cela, de préférence, avec guidage forcé.

3. Procédé selon la revendication 1 ou 2, caractérisé en ce que trois câbles (10, 11, 12), de préférence de même diamètre, sont amenés en assemblage en triangle avec un troisième câble supérieur se trouvant en position d'appui (12) au-dessus de câbles situés l'un à côté de l'autre (10, 11).

4. Procédé selon l'une des revendications 1 à 3, caractérisé en ce que les câbles (10, 11, 12) sont recouverts par deux bandes (15, 16) disposées approximativement à plat l'une à côté de l'autre, qui sont guidées de préférence à une certaine distance l'une au-dessus de l'autre dans le puits à câbles (26), tout comme les câbles (10...12), et qui ne sont écartées que peu avant leur sortie de ce puits.

5. Procédé selon la revendication 4, caractérisé en ce que les bandes (15, 16) sont écartées les unes des autres avant leur sortie du puits à câbles (26) de façon que leurs bords (50, 51) tournés l'un vers l'autre se recouvrent dans une zone étroite.

6. Charrue de pose pour poser des câbles (10, 11, 12) ou des éléments semblables dans le sol, comprenant au moins un soc de charrue et un puits à câbles (26) qui est disposé derrière le soc de charrue dans le sens de pose (23) et qui présente au moins des canaux de guidage de câbles (30, 31, 32) superposés dans un plan vertical ou les uns derrière les autres pour recevoir chacun un câble (10, 11, 12), caractérisé en ce que les canaux de guidage de câbles (30, 31, 32) présentent une largeur de passage correspondant à peu près à un câble (10, 11, 12) et en ce que les orifices de sortie (37) des canaux de guidage de câbles (30, 31, 32) se terminent à une certaine distance avant un orifice (38) du côté de la terre du puits à câbles (26) pour former une section de réorientation (43) située après les orifices de sortie (37) des canaux de guidage de câbles (30, 31, 32) et destinée à réorienter les câbles (10, 11, 12).

7. Charrue de pose selon la revendication 6, caractérisée en ce que les canaux de guidage de câbles (30...32) disposés, de préférence, parallèlement l'un à l'autre et en courbe, présentent des orifices d'entrée (35) disposés les uns derrière les autres dans la direction de pose (23) pour l'entrée à peu près verticale des câbles (10...12), et des orifices de sortie (37) superposés pour la sortie à peu près horizontale des câbles (10...12).

8. Charrue de pose selon l'une des revendications 6 ou 7, caractérisée en ce que la largeur du puits à câbles (26) et du soc de charrue (24) correspond à peu près au diamètre du plus gros des câbles à poser (10, 11 ou 12).

9. Charrue de pose selon l'une des revendications 6 à 8, caractérisée en ce que le puits à câbles (26) présente un élargissement continu dans la zone de la section de réorientation (43) vers l'orifice (38) du côté de la terre et, en particulier, l'orifice du côté de la terre (38) s'élargit jusqu'à un peu au-delà de la largeur de deux câbles l'un à côté de l'autre (10, 11), de préférence en direction horizontale.

10. Charrue de pose selon la revendication 9, caractérisée en ce que le puits à câbles (26) comporte, dans la zone de la section de réorientation (43), au moins un organe de guidage pour amener les câbles (10...12), sortant dans un plan les uns au-dessus des autres ou les uns derrière les autres des canaux de guidage de câbles (30...32), dans des plans situés les uns à côté des autres.

11. Charrue de pose selon la revendication 10, caractérisée en ce que l'organe de guidage se présente sous forme d'une pièce à ajuster (45) en forme de matrice dans l'orifice (38) du côté de la terre du puits à câbles (26) et en ce qu'il présente, de préférence, un profil continu (47) formé de plusieurs segments de cercle (48, 49) avec des profils correspondant à la disposition des câbles à poser (10...12).

12. Charrue de pose selon la revendication 10, caractérisée en ce que l'organe de guidage est constitué d'un guide cunéiforme (46) monté de manière fixe dans la section de réorientation (43) sur une paroi latérale (28) du puits à câbles (26), ce guide rétrécissant la section de réorientation (43) par zone vers l'orifice (38) du côté de la terre du puits à câbles (26) et s'étendant dans la zone des deux câbles supérieurs (11, 12) à son extrémité tournée vers l'orifice de sortie (37) des canaux de guidage de câbles (30...32) ainsi que diminuant de hauteur vers l'orifice (38) du côté de la terre du puits à câbles (26), de manière à ne recouvrir encore que le câble supérieur (12), la plus grande épaisseur du guide cunéiforme (46) correspondant à peu près au demi-diamètre du câble (10, 11 ou 12).

13. Charrue de pose selon l'une des revendications 6 à 12, caractérisée en ce que, au-dessus des canaux de guidage des câbles (30...32), sont disposés deux canaux de guidage des bandes superposés (33, 34) pour deux bandes (15, 16) destinées à recouvrir les câbles (10...12) et que les canaux de guidage de bandes (33, 34) sont conçus, de préférence, pour guider parallèlement les bandes (15, 16) disposées à plat.

14. Charrue de pose selon l'une des revendications 6 à 13, caractérisée en ce que les canaux de guidage des câbles (30...32) et les deux canaux de guidage des bandes (33, 34) sont destinés à l'introduction latérale des câbles (10...12) ou des bandes (15, 16), les canaux de guidage des câbles (30...32) et/ou les canaux de guidage des bandes (32, 33) étant fixés, de préférence, par un côté à une paroi latérale (28) du puits à câbles (26) et pouvant être fermés du côté ouvert opposé par une paroi latérale rabattable et fermable (29) du puits à câbles (26).

15. Charrue de pose selon l'une des revendications 6 à 14, caractérisée en ce que les canaux de guidage des câbles (30...32) et les canaux de guidage des bandes (33, 34) sont disposés sous forme de paquets de câbles assemblés de manière amovible entre les parois latérales fixes parallèles (28, 29) du puits à câbles (26) et en ce que le puits à câbles (26) est complètement ouvert dans le dessus pour permettre l'enlèvement ou l'introduction de l'ensemble des canaux.

16. Charrue de pose selon la revendication 15, caractérisée en ce que les canaux de guidage des câbles (30...32) et les canaux de guidage des bandes (33, 34) sont complètement ouverts sur un côté dans l'ensemble des canaux pour permettre l'introduction des câbles (10...12) ou des bandes (15, 16) d'un côté des canaux de guidage des câbles (30...32) ou des canaux de guidage des bandes (33, 34).
